# EUROPEAN PATENT SPECIFICATION

(11) **EP 2 177 562 B1**
(45) Date of publication and mention of the grant of the patent: **14.05.2014**
(21) Application number: 09012926.3
(22) Date of filing: 13.10.2009
(51) Int. Cl.: C08K 3/00, C08C 19/44

(54) **Polymer, rubber composition and tire using the same**
Polymer, Gummimischung und Reifen damit
Polymère, composition en caoutchouc et pneumatique l'utilisant

(30) Priority: 16.10.2008 JP 2008267929
(43) Date of publication of application: 21.04.2010
(73) Proprietor: Sumitomo Rubber Industries, Ltd., Kobe-shi, Hyogo 651-0072 (JP)
(72) Inventor: Kazuyuki, Nishioka, Kobe-shi Hyogo 651-0072 (JP); Kazuo, Hochi, Kobe-shi Hyogo 651-0072 (JP); Katsumi, Terakawa, Kobe-shi Hyogo 651-0072 (JP); Ryuichi, Tokimune, Kobe-shi Hyogo 651-0072 (JP)
(74) Representative: Manitz, Finsterwald & Partner GbR

(56) References cited:
- EP-A1- 0 693 505
- EP-A1- 0 870 786
- EP-A1- 1 714 984
- JP-A- 58 154 742
- US-A1- 2004 044 157
- US-B1- 6 211 321
- US-B1- 6 693 160

## Description

### TECHNICAL FIELD

The present invention relates to a rubber composition containing a nitrogen-containing polymer, which is excellent in balance between fuel economy and wet grip performance, and a tire using the rubber composition.

### BACKGROUND ART

The social need of reduction in carbon dioxide emission has become stronger in recent years, from the standpoint of environmental protection as well as the standpoints of saving resources and energy. For this reason, various measures, such as weight saving of automobiles and utilization of electrical energy, have been investigated for the purpose of reduction in carbon dioxide emission in the field of automobiles. As a common challenge in the automobile industry, low fuel consumption by improving rolling resistance of tires has been required. Safety improvement of automobiles at the time of running has been also more and more demanded. The fuel economy performance and safety of automobiles rely largely on the performance of tires to be used, and the demand for improving fuel efficiency, handling stability, and durability has become stronger on tires for automobiles. These properties of tires depend on various factors, such as the structure and material of tires. Particularly, the performance of the rubber composition to be used for a tread portion that comes in contact with a road surface largely contributes to properties of tires, such as fuel efficiency, safety and durability. For this reason, many technical improvements of rubber compositions for tires have been examined, proposed, and put into practical use.

For example, as rubber performances of a tire tread, there have been requirements of low hysteresis loss for low fuel consumption and of high wet-skid resistance for improvement in wet grip performance. However, since low hysteresis loss comes into conflict with high wet skid resistance, it is actually difficult to satisfy the above-mentioned requirements by improving only one of these performances. The typical technique for improving rubber compositions for tires is to improve materials to be used, and for example, structural improvements of rubber materials as typified by SBR and BR, and structural or compositional improvements of reinforcing fillers such as carbon black and silica, vulcanizing agents, plasticizers, and the like have been made.

Patent Document 1 proposes a rubber composition that comprises a rubber component containing a polybutadiene rubber, a tin-modified polybutadiene rubber, and other rubbers in order to provide a rubber product low in hysteresis loss. Patent Document 2 proposes a modified diene rubber composition which comprises a modified diene rubber obtained by modifying a diene rubber with an organosilicon compound. In recent years, however, stricter demands have been placed on tire fuel efficiency in view of environmental problems, and use of the above methods does not satisfy a demand for balance between fuel economy and wet grip performance.
Patent Document 1: JP-A 2006-063143
Patent Document 2: JP-A 2000-344955

US 6,693,160 B1 discloses a rubbery polymer which contains repeat units derived from at least one conjugated diolefin monomer, at least one nitrogen-containing functionalized monomer and optionally other monomers, like vinyl aromatic compounds. A similar rubbery polymer is disclosed in US 2004/0044157 A1.

EP 1 714 984 A1 relates to a rubber composition comprising a conjugated diene-based elastomer, which is modified in-chain with p- or m-(2-pyrrolidino-ethyl) styrene (PES)- and/or m-(2-pyrrolidino-1-methylethyl) alpha-methylstyrene (PAMS)-derived units and is end-coupled with an alkoxysilane group. This elastomer or copolymer, respectively, may comprise 0.05 to 20 % by weight of PES and/or PAMS, 5 to 45 % by weight of styrene and 10 to 90 % by weight of a conjugated diene selected from isoprene and/or 1,3-butadiene.

### SUMMARY OF THE INVENTION

The present invention has its object to provide a rubber composition that can solve the above-mentioned problems so as to provide a tire excellent in fuel economy and wet grip performance.

The present invention relates to a rubber composition comprising
a) a rubber component that contains a polymer in an amount of 5 to 90 % by weight per 100 % by weight of the rubber component, wherein the polymer is obtainable by copolymerizing
   a conjugated diene compound and/or an aromatic vinyl compound with
   a nitrogen-containing compound represented by the formula: 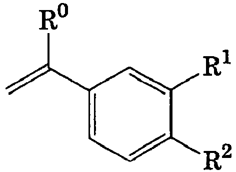 wherein R¹ and R² are each hydrogen, the formula: 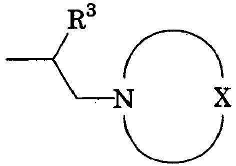 or the formula: 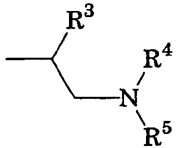 provided that at least one of R¹ and R² is not hydrogen,
   R³ represents hydrogen or a C₁₋₄ hydrocarbon group,
   X represents a saturated ring-forming part consisting of (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁴)ₙ, or (CR¹⁰R¹¹)ₘ-S-(CR¹³R¹⁴)ₙ,
   X may be substituted with the formula: 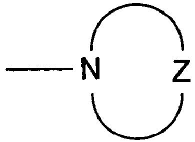 or the formula: 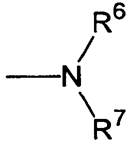 Z represents a saturated ring-forming part consisting of (CR⁸R⁹)ₗ, (CR¹⁰R¹¹)ₘ-NR¹²- (CR¹³R¹⁴)ₙ, (CR¹⁰R¹¹)ₘ-O- (CR¹³R¹⁴)ₙ, or (CR¹⁰R¹¹)ₘ-S- (CR¹³R¹⁴)ₙ,
   R⁴ to R⁷ each represent hydrogen, a C₁₋₃₀ aliphatic hydrocarbon group, a C₃₋₃₀ alicyclic hydrocarbon group, a C₅₋₃₀ aromatic hydrocarbon group, or a heterocyclic group containing 3 to 30 annular atoms, and are the same as or different from each other,
   R⁰, and R⁸ to R¹⁴ each represent hydrogen, a C₁₋₃₀ aliphatic hydrocarbon group, a C₃₋₃₀ alicyclic hydrocarbon group, or a C₅₋₃₀ aromatic hydrocarbon group, and are the same as or different from each other, and
   1 represents an integer of 3 to 10, and m and n each represent an integer of 1 to 9, and (b) silica.

At least one terminal of the polymer is preferably modified with a modifying agent having a functional group that contains at least one atom selected from the group consisting of nitrogen, oxygen and silicon.

The amount of the nitrogen-containing compound in the polymer is preferably 0.05 to 30% by weight.

The polymer preferably has a weight-average molecular weight (Mw) of 1.0 × 10⁵ to 2.0 × 10⁶.

In the rubber composition, the polymer is contained in an amount between 5% by weight to 90% by weight per 100% by weight of the rubber component.

The rubber composition preferably includes 5 to 150 parts by weight of carbon black and/or silica per 100 parts by weight of the rubber component containing the polymer.

The present invention also relates to a tire produced using the rubber composition.

The present invention can provide: a rubber composition which includes a novel polymer having a specific nitrogen-containing compound and has an excellent balance between fuel economy and wet grip performance; and a tire produced using the rubber composition, which has the above properties.

### BEST MODE FOR CARRYING OUT THE INVENTION

The following will describe the present invention in detail.

The polymer included in the rubber composition of the present invention can be obtained by copolymerizing
a conjugated diene compound and/or an aromatic vinyl compound with
a nitrogen-containing compound represented by the formula: 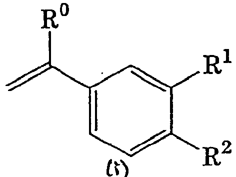 wherein (i) R¹ and R² are each hydrogen, the formula: 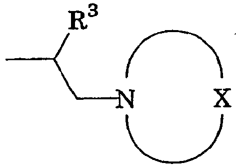 or the formula: 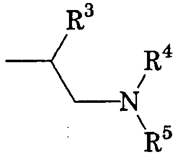 provided that at least one or R¹ and R² is not nyarogen,
(ii) R³ represents hydrogen or a C₁₋₄ hydrocarbon group,
(iii) X represents a saturated ring-forming part consisting of (CR⁸R⁹)ₗ, (CR¹⁰R¹¹)ₘ-NR¹²-(CR¹³R¹⁴)ₙ, (CR¹⁰R¹¹)ₘ-O-m-C(CR¹³R¹⁴)ₙ, or (CR¹⁰R¹¹)ₘ-S- (CR¹³R¹⁴)ₙ,
   X may be substituted with the formula: 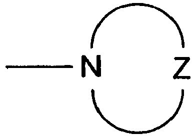 or the formula: 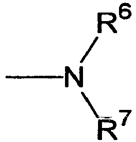
(iv) Z represents a saturated ring-forming part consisting of (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁴)ₙ, or (CR¹⁰R¹¹)ₘ-S- (CR¹³R¹⁴)ₙ,
(v) R⁴ to R⁷ each represent hydrogen, a C₁₋₃₀ aliphatic hydrocarbon group, a C₃₋₃₀ alicyclic hydrocarbon group, a C₅₋₃₀ aromatic hydrocarbon group, or a heterocyclic group containing 3 to 30 annular atoms, and are the same as or different from each other,
(vi) R⁰, and R⁸ to R¹⁴ each represent hydrogen, a C₁₋₃₀ aliphatic hydrocarbon group, a C₃-₃₀ alicyclic hydrocarbon group, or a C₅₋₃₀ aromatic hydrocarbon group, and are the same as or different from each other, and
(vii) l represents an integer of 3 to 10, and m and n each represent an integer of 1 to 9.

When R⁰, and R⁸ to R¹⁴ are each an aliphatic hydrocarbon group, the number of carbon atoms is 1 to 30, and preferably 1 to 5. When R⁰, and R⁸ to R¹⁴ are each an alicyclic hydrocarbon group, the number of carbon atoms is 3 to 30, and preferably 3 to 10. When R⁰, and R⁸ to R¹⁴ are each an aromatic hydrocarbon group, the number of carbon atoms is 5 to 30, and preferably 5 to 10.

Preferably, R⁰, and R⁸ to R¹⁴ are each hydrogen or a C₁₋₂ aliphatic hydrocarbon group.

R³ is preferably hydrogen or a C₁₋₂ hydrocarbon group.

When R⁴ to R⁷ are each an aliphatic hydrocarbon group, the number of carbon atoms is 1 to 30, and preferably 1 to 10. When R⁴ to R⁷ are each an alicyclic hydrocarbon group, the number of carbon atoms is 3 to 30, and preferably 3 to 10. When R⁴ to R⁷ are each an aromatic hydrocarbon group, the number of carbon atoms is 5 to 30, and preferably 5 to 10. When R⁴ to R⁷ are each a heterocyclic group (including an aromatic heterocyclic group), the number of annular atoms is 3 to 30, and preferably 3 to 10.

Preferably, R⁴ to R⁷ are each an aliphatic hydrocarbon group, an aromatic hydrocarbon group, or a heterocyclic group, and more preferably an aliphatic hydrocarbon group.

The symbol l is an integer of 3 to 10, and preferably an integer of 3 to 7. The symbols m and n are each an integer of 1 to 9, and preferably an integer of 1 to 6.

Since the symbol l is an integer of 3 to 10, there is a plurality of (CR⁸R⁹). The (CR⁸R⁹) moieties are the same as or different from each other. Similarly, the (CR¹⁰R¹¹) moieties are the same as or different from each other when the symbol m is an integer of two or more. The (CR¹³R¹⁴) moieties are the same as or different from each other when the symbol n is an integer of two or more.

The "saturated ring-forming part" used herein means a part of a saturated ring group. Specifically, in the above formulas, X and N constitute a saturated ring group, and Z and N constitute a saturated ring group.

Examples of the conjugated diene compound include 1,3-butadiene, isoprene, 1,3-pentadiene, 2,3-dimethylbutadiene, 2-phenyl-1,3-butadiene, 1,3-hexadiene, and the like. These may be used singly, or two or more of these may be used in combination. Particularly preferred among these are 1, 3-butadiene and isoprene from the viewpoints of practical utilities such as easy availability of monomers.

Examples of the aromatic vinyl compound include styrene, α-methylstyrene, 1-vinylnaphthalene, 3-vinyltoluene, ethylvinylbenzene, divinylbenzene, 4-cyclohexyl styrene, 2, 4, 6-trimethylstyrene, and the like. These may be used singly, or two or more of these may be used in combination. Particularly preferred among these is styrene from the viewpoints of practical utilities such as easy availability of monomers.

Examples of the nitrogen-containing compound represented by the above-mentioned formula include: 3- or 4-(2-azetidinoethyl)styrene, 3- or 4-(2-pyrrolidinoethyl)styrene, 3- or 4-(2-piperidinoethyl)styrene, 3- or 4-(2-hexamethyleneiminoethyl)styrene, 3- or 4-(2-heptamethyleneiminoethyl)styrene, 3- or 4-(2-octamethyleneiminoethyl)styrene, 3- or 4-(2-(2,5-dimethylpyrrolidino)ethyl)styrene, 3- or 4-(2-(2-methylpiperidino)ethyl)styrene, 3- or 4-(2-(3-methylpiperidino)ethyl)styrene, 3- or 4-(2-(4-methylpiperidino)ethyl)styrene, 3- or 4-(2-(2-ethylpiperidino)ethyl)styrene, 3- or 4-(2-(4-(1-pyrrolidinyl)piperidino)ethyl)styrene, 3- or 4-(2-(4-piperidinopiperidino)ethyl)styrene, 3- or 4-(2-(2,6-dimethylpiperidino)ethyl)styrene, 3- or 4-(2-(3,3-dimethylpiperidino)ethyl)styrene, 3- or 4-(2-(3,5-dimethylpiperidino)ethyl)styrene, 3- or 4-(2-(2,2,6,6-tetramethylpiperidino)ethyl)styrene, 3- or 4-(2-(4-dimethylamino-2,2,6,6-tetramethylpiperidino)ethyl) styrene, 3- or 4-(2-(1-methylpiperazino)ethyl)styrene, 3- or 4-(2-(1-ethylpiperazino)ethyl)styrene, 3- or 4-(2-(1-methylhomopiperazino)ethyl)styrene, 3- or 4-(2-morpholinoethyl)styrene, 3- or 4-(2-(2,6-dimethylmorpholino)ethyl)styrene, 3- or 4-(2-thiazolidinoethyl)styrene, 3- or 4-(2-thiomorpholinoethyl)styrene, 3- or 4-(2-dimethylaminoethyl)styrene, 3- or 4-(2-(N-ethylmethylamino)ethyl)styrene, 3- or 4-(2-diethylaminoethyl)styrene, 3- or 4-(2-(N-methylpropylamino)ethyl)styrene, 3- or 4-(2-(N-methylisopropylamino)ethyl)styrene, 3- or 4-(2-(N-ethylisopropylamino)ethyl)styrene, 3- or 4-(2-dipropylaminoethyl)styrene, 3- or 4-(2-diisopropylaminoethyl)styrene, 3- or 4-(2-(N-methylbutylamino)ethyl)styrene, 3- or 4-(2-(N-ethylbutylamino)ethyl)styrene, 3- or 4-(2-(N-methyl-tert-butylamino)ethyl)styrene, 3- or 4-(2-(N-tert-butylisopropylamino)ethyl)styrene, 3- or 4-(2-dibutylaminoethyl)styrene, 3- or 4-(2-(di-sec-butyl)aminoethyl)styrene, 3- or 4-(2-diisobutylaminoethyl)styrene, 3- or 4-(2-(tert-amyl-tert-butylamino)ethyl)styrene, 3- or 4-(2-dipentylaminoethyl)styrene, 3- or 4-(2-(N-methylhexylamino)ethyl)styrene, 3- or 4-(2-dihexylaminoethyl)styrene, 3- or 4-(2-(tert-amyl-tert-octylamino)ethyl)styrene, 3- or 4-(2-dioctylaminoethyl)styrene, 3- or 4-(2-bis(2-ethylhexylamino)ethyl)styrene, 3- or 4-(2-didecylaminoethyl)styrene, 3- or 4-(2-(N-methyloctadecylamino)ethyl)styrene, 3- or 4-(2-(N-methylanilino)ethyl)styrene, 3- or 4-(2-diphenylaminoethyl)styrene, 3- or 4-(2-(N-phenylbenzylamino)ethyl)styrene, 3- or 4-(2-(N-phenyl-1-naphthylamino)ethyl)styrene, 3- or 4-(2-(N-phenyl-2-naphthylamino)ethyl)styrene, 3- or 4-(2-(N-benzylmethylamino)ethyl)styrene, 3- or 4-(2-(N-ethylbenzylamino)ethyl)styrene, 3- or 4-(2-(N-isopropylbenzylamino)ethyl)styrene, 3- or 4-(2-(N-butylbenzylamino)ethyl)styrene, 3- or 4-(2-(N-(tert-butyl)benzylamino)ethyl)styrene, 3- or 4-(2-dibenzylaminoethyl)styrene, 3- or 4-(2-(N-methylphenethylamino)ethyl)styrene, 3- or 4-(2-(N-benzyl-2-phenethylamino)ethyl)styrene, 3- or 4-(2-(4-benzylpiperidino)ethyl)styrene, 3- or 4-(2-(1-phenylpiperazino)ethyl)styrene, 3- or 4-(2-(1-benzylpiperazino)ethyl)styrene, 3- or 4-(2-indolinoethyl)styrene, 3- or 4-(2-(2-methylindolino)ethyl)styrene, 3- or 4-(2-(1,2,3,4-tetrahydroquinolino)ethyl)styrene, 3- or 4-(2-(1,2,3,4-tetrahydroisoquinolino)ethyl)styrene, 3- or 4-(2-phenoxazinoethyl)styrene, 3- or 4-(2-phenothiazinoethyl)styrene, 3- or 4-(2-anilinopyridinoethyl)styrene, 3- or 4-(2-(2-benzylaminopyridino)ethyl)styrene, 3- or 4-(2-(2,2'-dipyridylamino)ethyl)styrene, 3- or 4-(2-(2-methylamino)pyridinoethyl)styrene, 3- or 4-(2-(1-(2-pyridyl)piperazino)ethyl)styrene, 3- or 4-(2-(2-(2-methylaminoethyl)pyridino)ethyl)styrene, 3- or 4-(2-(4-(ethylaminomethyl)pyridino)ethyl)styrene, 3- or 4-(2-(4-(ethylaminomethyl)pyridino)ethyl)styrene, and the like. These may be used singly, or two or more of these may be used in combination. In terms of the effect on performance improvement, preferred among these are 3- or 4-(2-dimethylaminoethyl)styrene, 3- or 4-(2-pyrrolidinoethyl)styrene, 3- or 4-(2-piperidinoethyl)styrene, 3- or 4-(2-hexamethyleneiminoethyl)styrene, 3- or 4-(2-morpholinoethyl)styrene, and 3- or 4-(2-thiazolidinoethyl)styrene.

The polymer can be produced by copolymerizing the nitrogen-containing compound with a conjugated diene compound and/or an aromatic vinyl compound. The polymerization is not particularly limited, and any one of solution polymerization, gas phase polymerization, and bulk polymerization can be used. The solution polymerization is particularly preferable in terms of the design flexibility of polymers, processability, and the like. The polymerization may be performed by either a batch system or a continuous system.

According to the solution polymerization, the desired polymer can be produced by, for example, anionically polymerizing the nitrogen-containing compound with a conjugated diene compound and/or an aromatic vinyl compound with use of a lithium compound as a polymerization initiator. Upon using the solution polymerization, the monomer concentration in solution is preferably 5% by mass or more, and more preferably 10% by mass or more. When the monomer concentration in solution is less than 5% by mass, the amount of polymer obtained tends to become small, likely leading to cost increase. The monomer concentration in solution is preferably 50% by mass or less, and more preferably 30% by mass or less. When the monomer concentration in solution exceeds 50% by mass, the solution viscosity is so high that stirring may be difficult, resulting in a tendency toward difficulty in polymerization.

In the case of anionic polymerization, the polymerization initiator is not particularly limited, and organolithium compounds are preferably used. The organolithium compounds preferably have a C₂₋₂₀ alkyl group. Examples thereof include: ethyllithium, n-propyllithium, isopropyllithium, n-butyllithium, sec-butyllithium, tert-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, a reaction product of diisopropenylbenzene and butyllithium, and the like. Preferred among these are n-butyllithium and sec-butyllithium from the viewpoints of easy availability, safety, and the like.

The method for producing a polymer by anionic polymerization using the organolithium compound as a polymerization initiator is not particularly limited, and conventionally known methods can be used. Specifically, the desired polymer can be obtained by anionically polymerizing a conjugated diene compound and/or an aromatic vinyl compound with the nitrogen-containing compound represented by the above formula in an organic solvent inert to the reaction, for example, a hydrocarbon solvent such as an aliphatic, alicyclic, or aromatic hydrocarbon compound, with use of the above lithium compound as a polymerization initiator, and if necessary, in the presence of a randomizer.

C₃₋₈ hydrocarbon solvents are preferable as the hydrocarbon solvent. Examples thereof include: propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, ethylbenzene, and the like. These may be used singly, or two or more of these may be used in admixture.

The term "randomizer" used herein means a compound having a function of controlling the microstructure of conjugated diene portion in a polymer, for example, increase of 1,2-bond in butadiene portion or increase of 3, 4-bond in isoprene portion, or a function of controlling the compositional distribution of each monomer units in a polymer, for example, randomization of butadiene unit and styrene unit in a butadiene-styrene copolymer. The randomizer is not particularly limited, and any of publicly known compounds that are generally used as a randomizer can be used. Examples thereof include ethers and tertiary amines, such as dimethoxybenzene, tetrahydrofuran, dimethoxyethane, diethylene glycol dibutyl ether, diethylene glycol dimethyl ether, bistetrahydrofuryl propane, triethylamine, pyridine, N-methylmorpholine, N,N,N',N'-tetramethylethylenediamine, and 1,2-dipiperidinoethane. Potassium salts, such as potassium-t-amylate and potassium-t-butoxide, and sodium salts, such as sodium-t-amylate, can be also used. These randomizers may be used singly, or two or more of these may be used in combination. The randomizer is preferably used in an amount of 0.01 molar equivalents or more, and more preferably 0.05 molar equivalents or more, per mole of the organolithium compound. When the randomizer is used in an amount of less than 0.01 molar equivalents, effects of adding it tend to become small, likely resulting in difficulty in randomization. The randomizer is preferably used in an amount of 1000 molar equivalents or less, and more preferably 500 molar equivalents or less, per mole of the organolithium compound. When the randomizer is used in an amount of more than 1000 molar equivalents, the reaction rate of monomers tends to greatly change, likely resulting in difficulty in randomization on the contrary.

At least one terminal of the polymer may be modified with a modifying agent having a functional group that contains at least one atom selected from the group consisting of nitrogen, oxygen and silicon. Examples of the functional group containing at least one atom selected from the group consisting of nitrogen, oxygen and silicon include an amino group, an amide group, an alkoxysilyl group, an isocyanato group, an imino group, an imidazole group, a urea group, an ether group, a carbonyl group, a carboxyl group, a hydroxyl group, a nitrile group, a pyridyl group, and the like. Examples of the modifying agent include: 3-glycidoxypropyltrimethoxysilane, (3-triethoxysilylpropyl)tetrasulfide, 1-(4-N,N-dimethylaminophenyl)-1-phenylethylene, 1,1-dimethoxytrimethylamine, 1,2-bis(trichlorosilyl)ethane, 1,3,5-tris(3-triethoxysilylpropyl)isocyanurate, 1,3,5-tris(3-trimethoxysilylpropyl)isocyanurate, 1,3-dimethyl-2-imidazolidinone, 1,3-propanediamine, 1,4-diaminobutane, 1-[3-(triethoxysilyl)propyl]-4,5-dihydroimidazole, 1-glycidyl-4-(2-pyridyl)piperazine, 1-glycidyl-4-phenylpiperazine, 1-glycidyl-4-methylpiperazine, 1-glycidyl-4-methylhomopiperazine, 1-glycidylhexamethyleneimine, 11-aminoundecyltriethoxysilane, 11-aminoundecyltrimethoxysilane, 1-benzyl-4-glycidylpiperazine, 2-(3,4-epoxycyclohexyl)ethyltrimethoxysilane, 2-(4-morpholinodithio)benzothiazole, 2-(6-aminoethyl)-3-aminopropyltrimethoxysilane, 2-(triethoxysilylethyl)pyridine, 2-(trimethoxysilylethyl)pyridine, 2-(2-pyridylethyl)thiopropyltrimethoxysilane, 2-(4-pyridylethyl)thiopropyltrimethoxysilane, 2,2-diethoxy-1,6-diaza-2-silacyclooctane, 2,2-dimethoxy-1,6-diaza-2-silacyclooctane, 2,3-dichloro-1,4-naphthoquinone, 2,4-dinitrobenzenesulfonyl chloride, 2,4-tolylene diisocyanate, 2-(4-pyridylethyl)triethoxysilane, 2-(4-pyridylethyl)trimethoxysilane, 2-cyanoethyltriethoxysilane, 2-tributylstannyl-1,3-butadiene, 2-(trimethoxysilylethyl)pyridine, 2-vinylpyridine, 2-(4-pyridylethyl)triethoxysilane, 2-(4-pyridylethyl)trimethoxysilane, 2-laurylthioethyl phenyl ketone, 3-(1-hexamethyleneimino)propyl(triethoxy)silane, 3-(1,3-dimethylbutylidene)aminopropyltriethoxysilane, 3-(1,3-dimethylbutylidene)aminopropyltrimethoxysilane, 3-(2-aminoethylaminopropyl)trimethoxysilane, 3-(m-aminophenoxy)propyltrimethoxysilane, 3-(N,N-dimethylamino)propyltriethoxysilane, 3-(N,N-dimethylamino)propyltrimethoxysilane, 3-(N-methylamino)propyltriethoxysilane, 3-(N-methylamino)propyltrimethoxysilane, 3-(N-allylamino)propyltrimethoxysilane, 3,4-diaminobenzoic acid, 3-aminopropyldimethylethoxysilane, 3-aminopropyltriethoxysilane, 3-aminopropyltrimethoxysilane, 3-aminopropyl tris(methoxydiethoxy)silane, 3-aminopropyldiisopropylethoxysilane, 3-isocyanatepropyltriethoxysilane, 3-glycidoxypropyltriethoxysilane, 3-glycidoxypropyltrimethoxysilane, 3-glycidoxypropylmethyldimethoxysilane, 3-diethylaminopropyltrimethoxysilane, 3-diethoxy(methyl)silylpropyl succinic anhydride, 3-(N,N-diethylaminopropyl)triethoxysilane, 3-(N,N-diethylaminopropyl)trimethoxysilane, 3-(N,N-dimethylaminopropyl)diethoxymethylsilane, 3-(N,N-dimethylaminopropyl)triethoxysilane, 3-(N,N-dimethylaminopropyl)trimethoxysilane, 3-triethoxysilylpropyl succinic anhydride, 3-triethoxysilylpropyl acetic anhydride, 3-triphenoxysilylpropyl succinic anhydride, 3-triphenoxysilylpropyl acetic anhydride, 3-trimethoxysilylpropyl benzothiazole tetrasulfide, 3-hexamethyleneiminopropyltriethoxysilane, 3-mercaptopropyltrimethoxysilane, (3-triethoxysilylpropyl)diethylenetriamine, (3-trimethoxysilylpropyl)diethylenetriamine, 4,4'-bis(diethylamino)benzophenone, 4,4'-bis(dimethylamino)benzophenone, 4'-(imidazol-1-yl)-acetophenone, 4-[3-(N,N-diglycidylamino)propyl]morpholine, 4-glycidyl-2,2,6,6-tetramethylpiperidinyloxy, 4-aminobutyltriethoxysilane, 4-vinylpyridine, 4-morpholinoacetophenone, 4-morpholinobenzophenone, m-aminophenyltrimethoxysilane, N-(1,3-dimethylbutylidene)-3-(triethoxysilyl)-1-propaneamine, N-(1,3-dimethylbutylidene)-3-(trimethoxysilyl)-1-propaneamine, N-(1-methylethylidene)-3-(triethoxysilyl)-1-propaneamine, N-(2-aminoethyl)-3-aminopropylmethyldiethoxysilane, N-(2-aminoethyl)-3-aminopropylmethyldimethoxysilane, N-(2-aminoethyl)-3-aminopropyltriethoxysilane, N-(2-aminoethyl)-3-aminopropyltrimethoxysilane, N-(2-aminoethyl)-11-aminoundecyltriethoxysilane, N-(2-aminoethyl)-11-aminoundecyltrimethoxysilane, N-(2-aminoethyl)-3-aminoisobutylmethyldiethoxysilane, N-(2-aminoethyl)-3-aminoisobutylmethyldimethoxysilane, N-(3-diethoxymethylsilylpropyl)succinimide, N-(3-triethoxysilylpropyl)-4,5-dihydroimidazole, N-(3-triethoxysilylpropyl)pyrrole, N-(3-trimethoxysilylpropyl)pyrrole, N-3-[amino(polypropyleneoxy)]aminopropyltrimethoxysilane, N-[5-(triethoxysilyl)-2-aza-1-oxopentyl]caprolactam, N-[5-(trimethoxysilyl)-2-aza-1-oxopentyl]caprolactam, N-(6-aminohexyl)aminomethyltriethoxysilane, N-(6-aminohexyl)aminomethyltrimethoxysilane, N-allyl-aza-2,2-diethoxysilacyclopentane, N-allyl-aza-2,2-dimethoxysilacyclopentane, N-(cyclohexylthio)phthalimide, N-n-butyl-aza-2,2-diethoxysilacyclopentane, N-n-butyl-aza-2,2-dimethoxysilacyclopentane, N,N,N',N'-tetraethylaminobenzophenone, N,N,N',N'-tetramethylthiourea, N,N,N',N'-tetramethylurea, N,N'-ethyleneurea, N,N'-diethylaminobenzophenone, N,N'-diethylaminobenzophenone, N,N'-diethylaminobenzofuran, methyl N,N'-diethylcarbamate, N,N'-diethylurea, (N,N-diethyl-3-aminopropyl)triethoxysilane, (N,N-diethyl-3-aminopropyl)trimethoxysilane, N,N-dioctyl-N'-triethoxysilylpropylurea, N,N-dioctyl-N'-trimethoxysilylpropylurea, methyl N,N-diethylcarbamate, N,N-diglycidylcyclohexylamine, N,N-dimethyl-o-toluidine, N,N-dimethylaminostyrene, N,N-diethylaminopropylacrylamide, N,N-dimethylaminopropylacrylamide, N-ethylaminoisobutyltriethoxysilane, N-ethylaminoisobutyltrimethoxysilane, N-ethylaminoisobutylmethyldiethoxysilane, N-oxydiethylene-2-benzothiazole sulfenamide, N-cyclohexylaminopropyltriethoxysilane, N-cyclohexylaminopropyltrimethoxysilane, N-methylaminopropylmethyldimethoxysilane, N-methylaminopropylmethyldiethoxysilane, N-vinylbenzyl azacycloheptane, N-phenylpyrrolidone, N-phenylaminopropyltriethoxysilane, N-phenylaminopropyltrimethoxysilane, N-phenylaminomethyltriethoxysilane, N-phenylaminomethyltrimethoxysilane, n-butylaminopropyltriethoxysilane, n-butylaminopropyltrimethoxysilane, N-methylaminopropyltriethoxysilane, N-methylaminopropyltrimethoxysilane, N-methyl-2-piperidone, N-methyl-2-pyrrolidone, N-methyl-E-caprolactam, N-methylindolinone, N-methylpyrrolidone, p-(2-dimethylaminoethyl)styrene, p-aminophenyltrimethoxysilane, γ-glycidoxypropyltrimethoxysilane, γ-methacryloxypropyltrimethoxysilane, (aminoethylamino)-3-isobutyldiethoxysilane, (aminoethylamino)-3-isobutyldimethoxysilane, (aminoethylaminomethyl)phenethyltriethoxysilane, (aminoethylaminomethyl)phenethyltrimethoxysilane, acrylic acid, diethyl adipate, acetamidopropyltrimethoxysilane, aminophenyltrimethoxysilane, aminobenzophenone, ureidopropyltriethoxysilane, ureidopropyltrimethoxysilane, ethylene oxide, octadecyldimethyl(3-trimethoxysilylpropyl)ammonium chloride, glycidoxypropyltriethoxysilane, glycidoxypropyltrimethoxysilane, glycerol tristearate, chlorotriethoxysilane, chloropropyltriethoxysilane, chloropolydimethylsiloxane, chloromethyldiphenoxysilane, diallyldiphenyltin, diethylaminomethyltriethoxysilane, diethylaminomethyltrimethoxysilane, diethyl(glycidyl)amine, diethyldithiocarbamic acid 2-benzothiazolyl ester, diethoxydichlorosilane, (cyclohexylaminomethyl)triethoxysilane, (cyclohexylaminomethyl)trimethoxysilane, diglycidyl polysiloxane, dichlorodiphenoxysilane, dicyclohexylcarbodiimide, divinylbenzene, diphenylcarbodiimide, diphenylcyanamide, diphenylmethane diisocyanate, diphenoxymethylchlorosilane, dibutyldichlorotin, dimethyl(acetoxy-methylsiloxane)polydimethylsiloxane, dimethylaminomethyltriethoxysilane, dimethylaminomethyltrimethoxysilane, dimethyl(methoxy-methylsiloxane)polydimethylsiloxane, dimethylimidazolidinone, dimethylethyleneurea, dimethyldichlorosilane, dimethylsulfomoyl chloride, silsesquioxane, sorbitan trioleate, sorbitan monolaurate, titanium tetrakis(2-ethylhexyoxide), tetraethoxysilane, tetraglycidyl-1,3-bisaminomethylcyclohexane, tetraphenoxysilane, tetramethylthiuram disulfide, tetramethoxysilane, triethoxyvinylsilane, tris(3-trimethoxysilylpropyl)cyanurate, triphenylphosphate, triphenoxychlorosilane, triphenoxymethylsilicon, triphenoxymethylsilane, carbon dioxide, bis(triethoxysilylpropyl)amine, bis(trimethoxysilylpropyl)amine, bis[3-(triethoxysilyl)propyl]ethylenediamine, bis[3-(trimethoxysilyl)propyl]ethylenediamine, bis[3-(triethoxysilyl)propyl]urea, bis[(trimethoxysilyl)propyl]urea, bis(2-hydroxymethyl)-3-aminopropyltriethoxysilane, bis(2-hydroxymethyl)-3-aminopropyltrimethoxysilane, bis(2-ethylhexanoate)tin, bis(2-methylbutoxy)methylchlorosilane, bis(3-triethoxysilylpropyl)tetrasulfide, bisdiethylaminobenzophenone, bisphenol A diglycidyl ether, bisphenoxyethanol fluorene diglycidyl ether, bis(methyldiethoxysilylpropyl)amine, bis(methyldimethoxysilylpropyl)-N-methylamine, hydroxymethyltriethoxysilane, vinyltris(2-ethylhexyloxy)silane, vinylbenzyldiethylamine, vinylbenzyldimethylamine, vinylbenzyltributyltin, vinylbenzylpiperidine, vinylbenzylpyrrolidine, pyrrolidine, phenyl isocyanate, phenyl isothiocyanate, (phenylaminomethyl)methyldimethoxysilane, (phenylaminomethyl)methyldiethoxysilane, phthalic acid amide, hexamethylene diisocyanate, benzylideneaniline, polydiphenylmethane diisocyanate, polydimethylsiloxane, methyl-4-pyridyl ketone, methylcaprolactam, methyltriethoxysilane, methyltriphenoxysilane, methyl laurylthiopropionate, silicon tetrachloride, and the like. In terms of the effect of performance improvement, preferred among these are 3-(N,N-dimethylaminopropyl)trimethoxysilane, 3-(N,N-diethylaminopropyl)trimethoxysilane, 3-(N,N-dimethylaminopropyl)triethoxysilane, 3-(N,N-diethylaminopropyl)triethoxysilane, 3-glycidoxypropyltrimethoxysilane, 2-(4-pyridylethyl)triethoxysilane, N-(3-triethoxysilylpropyl)-4,5-dihydroimidazole, silicon tetrachloride, and the like.

Modification of the polymer with the modifying agent can be performed by reacting 0.01 to 10 parts by weight of the modifying agent with 100 parts by weight of the polymer so as to, for example in the case of the polymer obtained by anionic polymerization, react a functional group of the modifying agent with a terminal anion in the polymer. At least one terminal of the copolymer is preferably modified, and both terminals thereof are more preferably modified.

In the present invention, at the end of this reaction, publicly known antioxidants, and/or alcohols and the like for stopping polymerization reaction may be added if necessary.

The amount of the nitrogen-containing compound in the polymer is preferably 0. 05% by weight or more, and particularly preferably 0.1% by weight or more. When the amount of the nitrogen-containing compound is less than 0.05% by weight, fuel economy and wet grip performance tend not to be improved. The amount thereof is preferably 30% by weight or less, and particularly preferably 20% by weight or less. The amount exceeding 30% by weight tends to increase cost.

The weight-average molecular weight (Mw) of the polymer is preferably 1.0 × 10⁵ or more, and particularly preferably 2.0 × 10⁵ or more. When the weight-average molecular weight is less than 1.0 × 10⁵, hysteresis loss may be so large that fuel consumption is not sufficiently reduced; also, abrasion resistance tends to be lowered. The weight-average molecular weight (Mw) is preferably 2.0 × 10⁶ or less, and particularly preferably 1.5 × 10⁶ or less. When it exceeds 2.0 × 10⁶, processability tends to decrease.

In the rubber composition of the present invention, the polymer can be used with other rubber materials. Diene rubbers are preferably used as other rubber materials. The diene rubbers comprise natural rubbers (NRs) and/or diene type synthetic rubbers, and examples of the diene type synthetic rubbers include: isoprene rubber (IR), butadiene rubber (BR), styrene-butadiene rubber (SBR), acrylonitrile-butadiene rubber (NBR), chloroprene rubber (CR), isobutylene-isoprene rubber (IIR), and the like. NR, BR and SBR are preferred among these because of their favorable balance between grip performance and abrasion resistance. These rubbers may be used singly, or two or more of these may be used in combination.

In the rubber composition of the present invention, the blending amount of the polymer is 5% by weight or more and preferably 10% by weight or more, per 100% by weight of the rubber component. When the blending amount is less than 5% by weight, effects of improving fuel economy and wet grip performance are less likely to be obtained. The upper limit thereof is not particularly limited, and the blending amount thereof is 90% by weight or less, and preferably 80% by weight or less. The blending amount exceeding 90% by weight tends to increase cost.

According to the present invention, the rubber composition contains silica as a reinforcing agent and optionally carbon black.

The nitrogen adsorption specific surface area (N₂SA) of carbon black is preferably 80 m²/g or more, and particularly preferably 100 m²/g or more. A carbon black having an N₂SA of less than 80 m²/g tends not to exhibit sufficient wet grip performance, and tends to lower abrasion resistance. The N₂SA of carbon black is preferably 280 m²/g or less, and more preferably 250 m²/g or less. A carbon black having an N₂SA of more than 280 m²/g tends to exhibit poor dispersibility and to lower abrasion resistance.

The amount of carbon black is preferably 5 parts by weight or more, and more preferably 10 parts by weight or more, per 100 parts by weight of the rubber component. When the amount of carbon black is less than 5 parts by weight, abrasion resistance tends to decrease. The amount of carbon black is preferably 150 parts by weight or less, and more preferably 100 parts by weight or less, per 100 parts by weight of the rubber component. When the amount of carbon black exceeds 150 parts by weight, processability tends to worsen. The carbon black may be used singly, or two or more kinds thereof may be used in combination.

The nitrogen adsorption specific surface area (N₂SA) of silica is preferably 50 m²/g or more, and particularly preferably 80 m²/g or more. The N₂SA is preferably 300 m²/g or less, and particularly preferably 250 m²/g or less. A silica having an N₂SA of less than 50 m²/g tends to exhibit a small reinforcing effect and lower abrasion resistance; and a silica having an N₂SA of more than 300 m²/g tends to exhibit poor dispersibility, increase hysteresis loss, and increase fuel consumption.

The blending amount of silica is preferably 5 parts by weight or more, and more preferably 10 parts by weight or more, per 100 parts by weight of the rubber component. When the blending amount of silica is less than 5 parts by weight, abrasion resistance tends to be insufficient. The blending amount of silica is preferably 150 parts by weight or less, and more preferably 100 parts by weight or less, per 100 parts by weight of the rubber component. When the blending amount of silica exceeds 150 parts by weight, processability tends to worsen. The silica may be used singly, or two or more kinds thereof may be used in combination.

A silane coupling agent may be used together upon blending silica. Examples of the silane coupling agent include: bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyl trimethoxysilane, 3-mercaptopropyl triethoxysilane, 2-mercaptoethyl trimethoxysilane, 2-mercaptoethyl triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazole tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsililpropyl)tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazole tetrasulfide, and the like. Bis(3-triethoxysilylpropyl)tetrasulfide and 3-trimethoxysilylpropylbenzothiazolyl tetrasulfide are preferable among these in terms of effects of improving rubber reinforcement, and the like. These silane coupling agents may be used singly, or two or more of these may be used in combination.

The blending amount of the silane coupling agent is preferably 1 part by weight or more, and more preferably 2 parts by weight or more, per 100 parts by weight of the silica. When the blending amount of the silane coupling agent is less than 1 part by weight, the viscosity of the unvulcanized rubber composition obtained tends to be high, likely leading to poor processability. The blending amount of the silane coupling agent is preferably 20 parts by weight or less, and more preferably 15 parts by weight or less, per 100 parts by weight of the silica. When the blending amount of the silane coupling agent exceeds 20 parts by weight, the blending effects of a silane coupling agent tend to become smaller relative to the blending amount thereof, likely resulting in cost increase.

Various compounding ingredients and additives to be blended in rubber compositions for tires or for general use, such as other reinforcing agents, vulcanizing agents, vulcanization accelerators, various oils, antioxidants, softeners and plasticizers, may be blended in the rubber composition of the present invention. Each of these compounding ingredients and additives may be used in a commonly used amount.

The present invention also relates to a tire produced using the above rubber composition, and the tire may be produced by a usual method with use of the rubber composition of the present invention. More specifically, the rubber composition of the present invention prepared by blending the aforementioned chemical agents according to necessity is extruded and processed into a shape of each of tire components at an unvulcanized stage and then assembled with other tire components in a usual manner on a tire building machine to obtain an unvulcanized tire. Then, the unvulcanized tire is subjected to heating and pressing in a vulcanizer to obtain the tire of the present invention. The thus-obtained tire of the present invention exhibits an excellent balance between low heat build-up property and wet grip performance. It is preferable to use the rubber composition particularly for a tread portion among tire components.

### EXAMPLES

The present invention will be specifically described according to examples , and is not intended to be limited only to these examples.

In the following, respective chemical agents used for the synthesis of nitrogen-containing compounds (Monomers (1) to (10)) are listed.
Cyclohexane: cyclohexane (produced by Kanto Chemical Co., Inc.)
Pyrrolidine: pyrrolidine (produced by Kanto Chemical Co., Inc.)
Hexamethyleneimine: hexamethyleneimine (produced by Kanto Chemical Co., Inc.)
Morpholine: morpholine (produced by Kanto Chemical Co., Inc.)
Thiazolidine: thiazolidine (produced by Kanto Chemical Co., Inc.)
4-Piperidinopiperidine: 4-piperidinopiperidine (produced by Kanto Chemical Co., Inc.)
4-Dimethylamino-2,2,6,6-tetramethylpiperidine: 4-dimethylamino-2,2,6,6-tetramethylpiperidine (produced by Sigma-Aldrich Japan K.K.)
Dipropylamine: dipropylamine (produced by Sigma-Aldrich Japan K.K.)
Diphenylamine: diphenylamine (produced by Sigma-Aldrich Japan K.K.)
2,2'-Dipyridylamine: 2,2'-dipyridylamine (produced by Sigma-Aldrich Japan K.K.)
Divinylbenzene: divinylbenzene (produced by Sigma-Aldrich Japan K.K.)
1,3-Diisopropenylbenzene: 1,3-diisopropenylbenzene (produced by Sigma-Aldrich Japan K.K.)
1.6 M n-Butyl lithium in hexane: 1.6 M solution of n-butyl lithium in hexane (produced by Kanto Chemical Co., Inc.)
Isopropanol: isopropanol (produced by Kanto Chemical Co., Inc.)

### Production Example 1 (synthesis of Monomer (1))

To a 100 ml container in which the air therein was sufficiently substituted with nitrogen were added 50 ml of cyclohexane, 4.1 ml (3.6 g) of pyrrolidine, and 8.9 ml (6.5 g) of divinylbenzene. Thereto was further added 0.7 ml of 1.6 M n-butyl lithium in hexane at 0°C, and the mixture was stirred. After 1 hour, isopropanol was added to the mixture to stop the reaction, and then extraction and purification were performed to give Monomer (1).

### Production Examples 2 to 10 (synthesis of Monomers (2) to (10))

Monomers (2) to (10) were obtained in the same manner as Monomer (1), according to the formulations in Table 1.

**[Table 1]**

| | | Monomers | | | | | | | | | |
|---|---|---|---|---|---|---|---|---|---|---|---|
| | | (1) | (2) | (3) | (4) | (5) | (6) | (7) | (8) | (9) | (10) |
| Cyclohexane | (ml) | 50 | 50 | 50 | 50 | 50 | 50 | 50 | 50 | 50 | 50 |
| Pyrrolidine | (ml) | 4.1 | | | | | | | | | 4.1 |
| Hexamethyleneimine | (ml) | | 5.6 | | | | | | | | |
| Morpholine | (ml) | | | 4.4 | | | | | | | |
| Thiazolidine | (ml) | | | | 3.9 | | | | | | |
| 4-Piperidinopiperidine | (g) | | | | | 8.4 | | | | | |
| 4-Dimethylamino-2.2.6.6-tetramethylpiperidine | (g) | | | | | | 9.2 | | | | |
| Dipropylamine | (ml) | | | | | | | 6.9 | | | |
| Diphenylamine | (g) | | | | | | | | 8.5 | | |
| 2,2'-Dipyrirlylamine | (g) | | | | | | | | | 8.6 | |
| Divinylbenzene | (ml) | 8.9 | 8.9 | 8.9 | 8.9 | 8.9 | 8.9 | 8.9 | 8.9 | 8.9 | |
| 1,3-Diisopropenylbenzene | (ml) | | | | | | | | | | 10.5 |
| 1.6M n-Butyl lithium in hexane | (ml) | 0.7 | 0.7 | 0.7 | 0.7 | 0.7 | 0.7 | 0.7 | 0.7 | 0.7 | 0.7 |
| Isopropanol | (ml) | 2.0 | 2.0 | 2.0 | 2.0 | 2.0 | 2.0 | 2.0 | 2.0 | 2.0 | 2.0 |

In the following, respective chemical agents used for the synthesis of Polymers (1) to (38) are listed.
Cyclohexane: cyclohexane (produced by Kanto Chemical Co., Inc.)
Styrene: styrene (produced by Kanto Chemical Co., Inc.)
Butadiene: 1, 3-butadiene (produced by Takachiho Chemical Industrial Co., Ltd.)
Tetramethylethylenediamine: N,N,N',N'-tetramethylethylenediamine (produced by Kanto Chemical Co., Inc.)
1. 6 M n-Butyl lithium in hexane: 1. 6 M solution of n-butyl lithium in hexane (produced by Kanto Chemical Co., Inc.)
1.0 M Silicon tetrachloride: silicon tetrachloride (produced by Sigma-Aldrich Japan K.K.), which is diluted with cyclohexane to 1.0 M
1.0 M Tin tetrachloride: tin tetrachloride (produced by Sigma-Aldrich Japan K.K.), which is diluted with cyclohexane to 1.0 M
Modifying agent (1): the above-mentioned Monomer (1)
Modifying agent (2): tetraethoxysilane (produced by Shin-Etsu Chemical Co., Ltd.)
Modifying agent (3): 3-(N,N-dimethylaminopropyl)trimethoxysilane (produced by AZmax Co. Ltd.)
Modifying agent (4): 3-glycidoxypropyltrimethoxysilane (produced by AZmax Co. Ltd.)
Modifying agent (5): 3-triethoxysilylpropyl succinic anhydride (produced by AZmax Co. Ltd.)
Modifying agent (6): 2-(4-pyridylethyl)triethoxysilane (produced by AZmax Co. Ltd.)
Modifying agent (7): N-(3-triethoxysilylpropyl)4,5-dihydroimidazole (produced by AZmax Co. Ltd.)
Modifying agent (8): 11-(succinimidyloxy)undecyldimethylethoxysilane (produced by AZmax Co. Ltd.)
Modifying agent (9): 3-isocyanatepropyltriethoxysilane (produced by AZmax Co. Ltd.)
Modifying agent (10): tris (3-trimethoxysilylpropyl) cyanurate (produced by AZmax Co. Ltd.)
Isopropanol: isopropanol (produced by Kanto Chemical Co., Inc.)

### Example 1 (synthesis of Polymer (1))

To a 1000 ml pressure-resistant container in which the air therein was sufficiently substituted with nitrogen were added 600 ml of cyclohexane, 12.6 ml (11.4 g) of styrene, 71.0 ml (44.0 g) of butadiene, 0.29 g of Monomer (1), and 0.11 ml of tetramethylethylenediamine. Thereto was further added 0.2 ml of 1.6 M n-butyl lithium in hexane at 40°C, and the mixture was stirred. After 3 hours, 2 ml of isopropanol was added to the mixture to stop the polymerization. After adding 1 g of 2, 6-tert-butyl-p-cresol to the reaction solution, the solution was subjected to a reprecipitation treatment with methanol, and heated and dried to give Polymer (1).

### Examples 2 to 14 and Comparative Example 1 (synthesis of Polymers (2) to (15))

Polymers (2) to (15) were obtained in the same manner as Polymer (1), according to the formulations in Table 2.

**[Table 2]**

| | | Examples | | | | | | | | | | | | | | Comparative Example |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 |
| Polymers | | (1) | (2) | (3) | (4) | (5) | (6) | (7) | (8) | (9) | (10) | (12) | (12) | (13) | (14) | (15) |
| Cyclohexane | (ml) | 600 | 600 | 600 | 600 | 600 | 600 | 600 | 600 | 600 | 600 | 600 | 6001 | 600 | 600 | 600 |
| Styrene | (ml) | 12.6 | 12.6 | 12.6 | 12.6 | 12.6 | 12.6 | 12.6 | 12.6 | 12.6 | 12.6 | 12.8 | 12.6 | 12.6 | 12.6 | 12.6 |
| Butadiene | (ml) | 71.0 | 71.0 | 71.0 | 71.0 | 71.0 | 71.0 | 71.0 | 71.0 | 71.0 | 71.0 | 71.0 | 71.0 | 71.0 | 71.0 | 71.0 |
| Monomer (1) | (g) | 0.29 | | | | | | | | | | 0.01 | 0.29 | 0.29 | 0.29 | |
| Monomer (2) | (g) | | 0.29 | | | | | | | | | | | | | |
| Monomer (3) | (g) | | | 0.29 | | | | | | | | | | | | |
| Monomer (4) | (g) | | | | 0.29 | | | | | | | | | | | |
| Monomer (5) | (g) | | | | | 0.29 | | | | | | | | | | |
| Monomer (6) | (g) | | | | | | 0.29 | | | | | | | | | |
| Monomer (7) | (g) | | | | | | | 0.29 | | | | | | | | |
| Monomer (8) | (g) | | | | | | | | 0.29 | | | | | | | |
| Monomer (9) | (g) | | | | | | | | | 0.29 | | | | | | |
| Monomer (10) | (g) | | | | | | | | | | 0.29 | | | | | |
| Tetramethylethylenediamine | (ml) | 0.11 | 0.11 | 0.11 | 0.11 | 0.11 | 0.11 | 0.11 | 0.11 | 0.11 | 0.11 | 0.11 | 0.55 | 0.11 | 0.11 | 0.11 |
| 1.6M n-Butyl lithium in hexane | (ml) | 0.2 | 0.2 | 0.2 | 0.2 | 0.2 | 0.2 | 0.2 | 0.2 | 0.2 | 0.2 | 0.2 | 1.0 | 0.2 | 0.2 | 0.2 |
| 1.0 M Silicon tetrachloride | (ml) | 0.1 | 0.1 | 0.1 | 0.1 | 0.1 | 0.1 | 0.1 | 0.1 | 0.1 | 0.1 | 0.1 | | | | 0.1 |
| 1.0 M Tin tetrachloride | (ml) | | | | | | | | | | | | | 0.15 | | |
| Isopropanol | (ml) | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Amount of nitrogen-containing compound monomer in polymer | (Wt%) | 0.5 | 0.4 | 0.5 | 0.5 | 0.4 | 0.5 | 0.5 | 0.6 | 0.5 | 0.5 | 0.02 | 0.5 | 0.4 | 0.5 | 0 |
| Weight-average molecular weight Mw | ( x 10⁵) | 2.5 | 2.6 | 2.4 | 2.3 | 2.5 | 2.5 | 2.6 | 2.4 | 2.7 | 2.5 | 2.5 | 0.6 | 2.5 | 2.6 | 2.6 |

### Example 15 (synthesis of Polymer (16))

To a 1000 ml pressure-resistant container in which the air therein was sufficiently substituted with nitrogen were added 600 ml of cyclohexane, 12.6 ml (11.4 g) of styrene, 71.0 ml (44.0g) of butadiene, 0.29 g of Monomer (1), and 0.05 ml of tetramethylethylenediamine. Thereto was further added 0.1 ml of 1.6 M n-butyl lithium in hexane at 40°C, and the mixture was stirred. After 3 hours, 0.5 ml (0.47 g) of Modifying agent (3) was added to the mixture and stirred. After 1 hour, 2 ml of isopropanol was added to the mixture to stop the polymerization. After adding 1 g of 2,6-tert-butyl-p-cresol to the reaction solution, the solution was subjected to a reprecipitation treatment with methanol, and heated and dried to give Polymer (16).

### Examples 16 to 36 and Comparative Example 2 (synthesis of Polymers (17) to (38))

Polymers (17) to (38) were obtained in the same manner as Polymer (16), according to the formulations in Table 3.

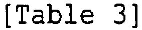

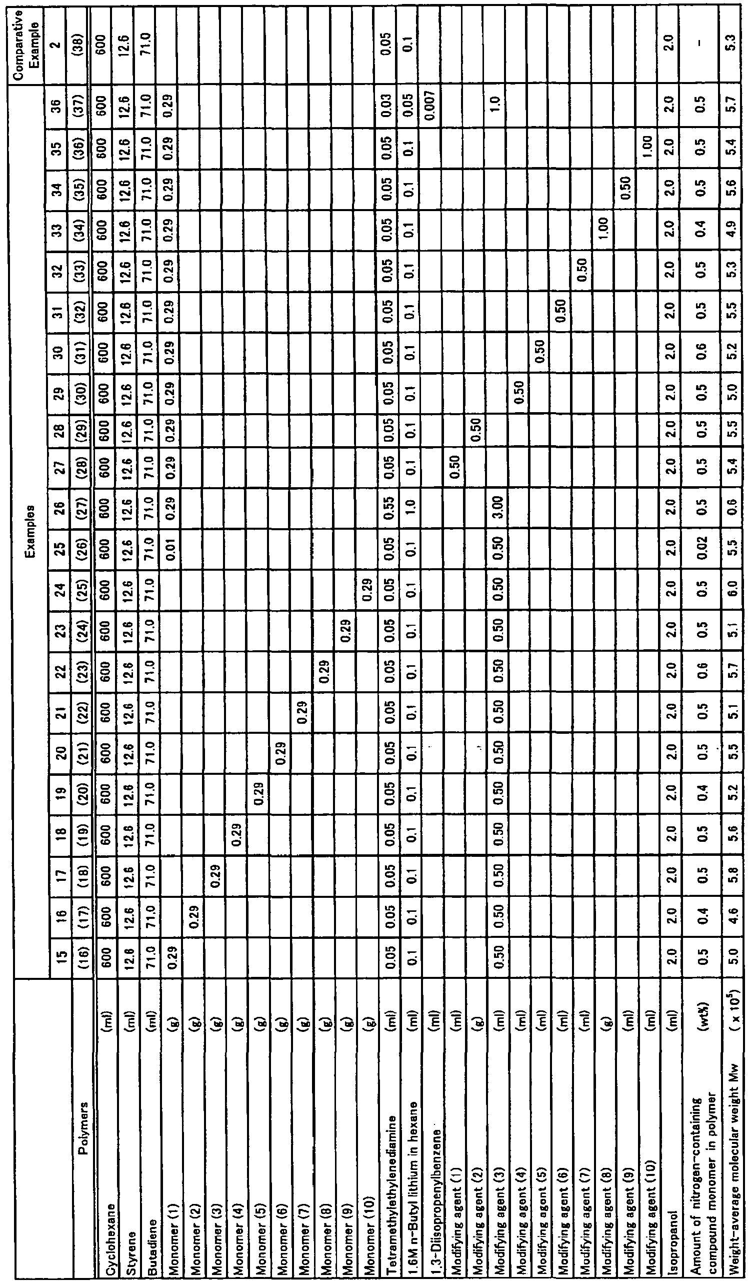

### (Measurement of weight-average molecular weight (Mw))

The weight-average molecular weight (Mw) was measured using an apparatus of GPC-8000 series produced by TOSOH CORPORATION with a differential refractometer as a detector, and the molecular weight was calibrated relative to polystyrene standards.

### (Measurement of amount of nitrogen-containing compound monomer in polymer)

The amount of nitrogen-containing compound monomer in a polymer was measured using an NMR apparatus of JNM-ECA series available from JEOL Ltd.

### Examples 37 to 76 and Comparative Examples 3 and 4

In the following, respective chemical agents used in Examples 37 to 76 and Comparative Examples 3 and 4 are listed.
NR: RSS#3
Carbon black: SHOBLACK N220 produced by Cabot Japan K.K. (nitrogen adsorption specific surface area (N₂SA): 125 m²/g)
Silica: Ultrasil VN3 produced by Degussa AG (nitrogen adsorption specific surface area (N₂SA): 210 m²/g)
Silane coupling agent: Si69 produced by Degussa AG
Aromatic oil: JOMO Process X140 produced by Japan Energy Corporation
Stearic acid: stearic acid produced by NOF Corporation
Zinc oxide: zinc white No. 1 produced by Mitsui Mining & Smelting Co., Ltd.
Antioxidant: Nocrac 6C produced by Ouchi Shinko Chemical Industrial Co., Ltd. (N-1,3-dimethylbutyl-N'-phenyl-p-phenylenediamine)
Wax: SUNNOC Wax produced by Ouchi Shinko Chemical Industrial Co., Ltd.
Sulfur: sulfur powder produced by Tsurumi Chemical industry Co., Ltd.
Vulcanization accelerator 1: Nocceler CZ produced by Ouchi Shinko Chemical Industrial Co., Ltd.
Vulcanization accelerator 2: Nocceler D produced by Ouchi Shinko Chemical Industrial Co., Ltd.

According to the blending formulations (all amounts are given in part (s) by weight) shown in Tables 4 and 5, the chemical agents were mixed to give the respective rubber composition samples. Each of these rubber compositions was press-vulcanized at 170°C for 20 minutes to give a vulcanizate, which was evaluated for fuel economy performance and wet grip performance by the following test methods.

### (Fuel economy performance (less rolling resistance))

Ta δ was measured at a dynamic strain amplitude of 1%, a frequency of 10 Hz, and a temperature of 60°C by using a spectrometer produced by Ueshima Seisakusho Co., Ltd. The inverse number of tan δ was expressed as an index based on the value of Comparative Example 3 or 4, which was regarded as 100. The larger index value means the less rolling resistance, that is, the lower fuel consumption.

### (Wet grip performance (1))

Grip performance was evaluated using a flat belt friction tester (FR5010 Series) produced by Ueshima Seisakusho Co., Ltd. A cylindrical rubber test piece with a width of 20 mm and a diameter of 100 mm was used. The slip ratio of the test piece on road surface was changed in the range of 0 to 70% under the conditions of a speed of 20 km/hour, a load of 4 kgf, and a road surface temperature of 20°C, and the maximum value among friction coefficients detected at this time was read and shown by an index, regarding the value of Comparative Example 3 or 4 as 100. The larger index value means the higher wet grip performance.

### (Wet grip performance (2))

The unvulcanized rubber composition was molded into a shape of tread, and assembled with other tire components to form an unvulcanized tire. The unvulcanized tire was press-vulcanized at 170°C for 10 minutes to produce a tire (size: 195/65R15). The tires were mounted on a domestic FR vehicle with 2000 cc displacement. In a test course on which water was sprinkled to form a wet road surface, the running distance required for the vehicle to stop after braking tires at 70 km/h (i.e. braking distance) was measured. The inverse number of the distance was expressed as an index based on the value of Comparative Example 3 or 4, which was regarded as 100. The larger index value means the higher wet grip performance.

**[Table 4]**

| | Examples | | | | | | | | | | | | | | | | Comparative Example |
|---|---|---|---|---|---|---|---|---|---|---|---|---|---|---|---|---|---|
| | 37 | 38 | 39 | 40 | 41 | 42 | 43 | 44 | 45 | 46 | 47 | 48 | 49 | 50 | 51 | 52 | 3 |
| NR | 30 | 30 | 30 | 30 | 30 | 30 | 30 | 30 | 30 | 30 | 30 | 30 | 30 | 30 | 30 | 30 | 30 |
| Polymer (1) | 70 | | | | | | | | | | | | | | 10 | 2 | |
| Polymer (2) | | 70 | | | | | | | | | | | | | | | |
| Polymer (3) | | | 70 | | | | | | | | | | | | | | |
| Polymer (4) | | | | 70 | | | | | | | | | | | | | |
| Polymer (5) | | | | | 70 | | | | | | | | | | | | |
| Polymer (6) | | | | | | 70 | | | | | | | | | | | |
| Polymer (7) | | | | | | | 70 | | | | | | | | | | |
| Polymer (8) | | | | | | | | 70 | | | | | | | | | |
| Polymer (9) | | | | | | | | | 70 | | | | | | | | |
| Polymer (10) | | | | | | | | | | 70 | | | | | | | |
| Polymer (11) | | | | | | | | | | | 70 | | | | | | |
| Polymer (12) | | | | | | | | | | | | 10 | | | | | |
| Polymer (13) | | | | | | | | | | | | | 70 | | | | |
| Polymer (14) | | | | | | | | | | | | | | 70 | | | |
| Polymer (15) | | | | | | | | | | | | 60 | | | 60 | 68 | 70 |
| Carbon black | 30 | 30 | 30 | 30 | 30 | 30 | 30 | 30 | 30 | 30 | 30 | 30 | 30 | 30 | 30 | 30 | 30 |
| Silica | 30 | 30 | 30 | 30 | 30 | 30 | 30 | 30 | 30 | 30 | 30 | 30 | 30 | 30 | 30 | 30 | 30 |
| Silane coupling agent | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 |
| Aromatic oil | 5 | 5 | 5 | 5 | 5 | 5 | 5 | 5 | 5 | 5 | 5 | 5 | 5 | 5 | 5 | 5 | 5 |
| Stearic acid | 2 | 2 | 2 | 2 | 2 | 2 | 2 | 2 | 2 | 2 | 2 | 2 | 2 | 2 | 2 | 2 | 2 |
| Zinc oxide | 3 | 3 | 3 | 3 | 3 | 3 | 3 | 3 | 3 | 3 | 3 | 3 | 3 | 3 | 3 | 3 | 3 |
| Antioxidant | 1 | 1 | 1 | 1 | 1 | 1 | 1 | 1 | 1 | 1 | 1 | 1 | 1 | 1 | 1 | 1 | 1 |
| Wax | 1 | 1 | 1 | 1 | 1 | 1 | 1 | 1 | 1 | 1 | 1 | 1 | 1 | 1 | 1 | 1 | 1 |
| Sulfur | 1.5 | 1.5 | 1.5 | 1.5 | 1.5 | 1.5, | 1.5 | 1.5 | 1.5 | 1.5 | 1.5 | 1.5 | 1.5 | 1.5 | 1.5 | 1.5 | 1.5 |
| Vulcanization accelerator 1 | 1 | 1 | 1 | 1 | 1 | 1 | 1 | 1 | 1 | 1 | 1 | 1 | 1 | 1 | 1 | 1 | 1 |
| Vulcanization accelerator 2 | 0.5 | 0.5 | 0.5 | 0.5 | 0.5 | 0.5 | 0.5 | 0.5 | 0.5 | 0.5 | 10.51 | 0.5 | 0.5 | 0.5 | 0.5 | 0.5 | 0.5 |
| Fuel economy index | 112 | 110 | 113 | 111 | 106 | 105 | 107 | 107 | 106 | 110 | 103 | 99 | 116 | 102 | 104 | 101 | 100 |
| Wet grip performance (1) | 106 | 105 | 1071 | 104 | 103 | 103 | 106 | 105 | 103 | 106 | 103 | 111 | 108 | 108 | 102 | 100 | 100 |
| Wet grip performance (2) | 105 | 105 | 106 | 103 | 103 | 103 | 105 | 106 | 103 | 105 | 103 | 109 | 106 | 105 | 100 | 100 | 100 |

Table 4 shows that the rubber compositions of Examples 37 to 52 each containing a polymer that has the nitrogen-containing compound according to the present invention are excellent in balance between fuel economy and wet grip performance in comparison with the rubber composition of Comparative Example 3.

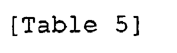

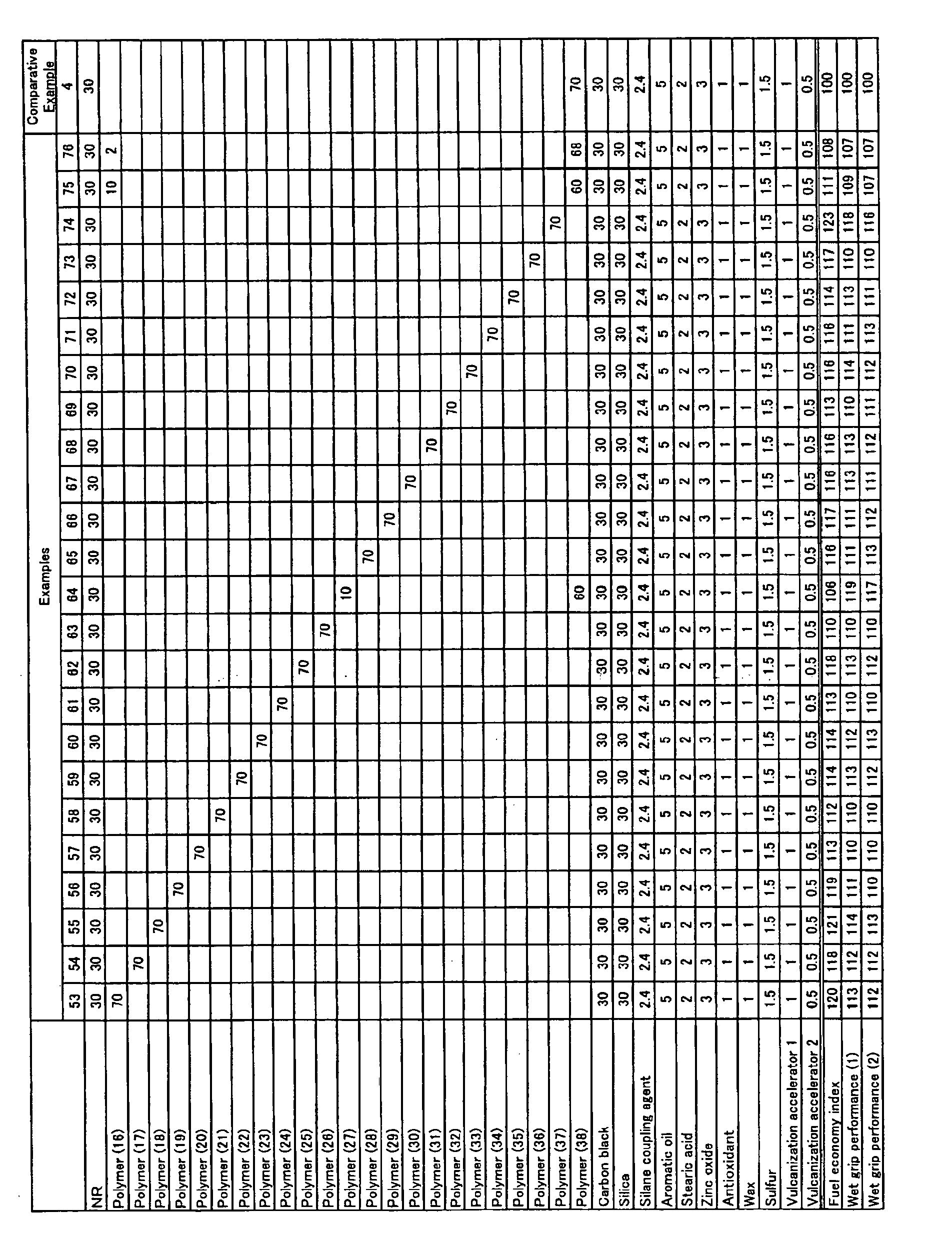

Table 5 shows that the rubber compositions of Examples 53 to 76 each containing a polymer whose main chain has a specific nitrogen-containing compound and whose terminal is modified with a specific functional group are excellent in balance between fuel economy and wet grip performance, in comparison with the rubber composition of Comparative Example 4 containing a polymer that does not have the nitrogen-containing compound and whose terminal is not modified.

## Claims

1. A rubber composition comprising
(a) a rubber component that contains a polymer in an amount of 5 to 90 % by weight per 100 % by weight of the rubber component, wherein the polymer is obtainable by copolymerizing
a conjugated diene compound and/or an aromatic vinyl compound with
a nitrogen-containing compound represented by the formula: 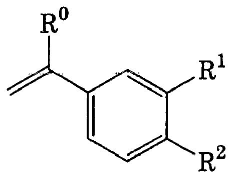 wherein (i) R¹ and R² are each hydrogen, the formula: 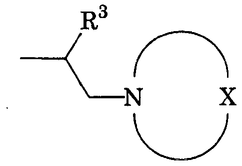 or the formula: 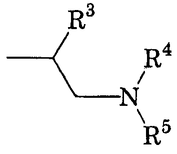 provided that at least one of R¹ and R² is not hydrogen,
(ii) R³ represents hydrogen or a C₁₋₄ hydrocarbon group,
(iii) X represents a saturated ring-forming part consisting of (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁴)ₙ, or (CR¹⁰R¹¹)ₘ-S-(CR¹³R¹⁴)ₙ,
X may be substituted with the formula: 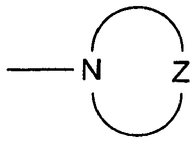 or the formula: 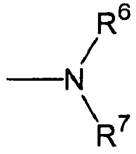
(iv) Z represents a saturated ring-forming part consisting of (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁹)ₙ, or (CR¹⁰R¹¹)ₘ-S-(CR¹³R¹⁴)ₙ,
(v) R⁴ to R⁷ each represent hydrogen, a C₁₋₃₀ aliphatic hydrocarbon group, a C₃₋₃₀ alicyclic hydrocarbon group, a C₅₋₃₀ aromatic hydrocarbon group, or a heterocyclic group containing 3 to 30 annular atoms, and are the same as or different from each other,
(vi) R⁰, and R⁸ to R¹⁴ each represent hydrogen, a C₁₋₃₀ aliphatic hydrocarbon group, a C₃₋₃₀ alicyclic hydrocarbon group, or a C₅₋₃₀ aromatic hydrocarbon group, and are the same as or different from each other, and
(vii) 1 represents an integer of 3 to 10, and (viii) m and n each represent an integer of 1 to 9, and
(b) silica.

2. The rubber composition according to Claim 1, wherein at least one terminal of the polymer is modified with a modifying agent having a functional group that contains at least one atom selected from the group consisting of nitrogen, oxygen and silicon.

3. The rubber composition according to Claim 1, wherein the amount of the nitrogen-containing compound in the polymer is 0.05 to 30% by weight.

4. The rubber composition according to Claim 1,wherein the polymer has a weight-average molecular weight (Mw) of 1.0 × 10⁵ to 2.0 × 10⁶.

5. The rubber composition according to Claim 1, comprising 5 to 150 parts by weight of carbon black and/or silica per 100 parts by weight of the rubber component containing the polymer.

6. A tire produced using the rubber composition according to Claim 1.

## Patentansprüche

1. Kautschukzusammensetzung umfassend
(a) eine Kautschukkomponente, die ein Polymer in einer Menge von 5 bis 90 Gewichts-% auf 100 Gewichts-% der Kautschukkomponente enthält,
wobei das Polymer erhältlich ist durch Copolymerisieren
einer konjugierten Dienverbindung und/oder einer aromatischen Vinylverbindung mit
einer stickstoffhaltigen Verbindung, die dargestellt ist durch die For-mel: 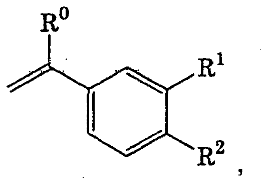 wobei (i) R¹ und R² jeweils Wasserstoff sind, die Formel: 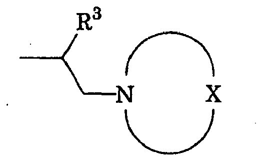 oder die Formel: 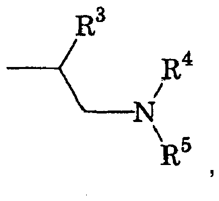 mit der Maßgabe, dass zumindest einer von R¹ und R² nicht Wasserstoff ist,
(ii) R³ Wasserstoff oder eine C₁₋₄-Kohlenwasserstoffgruppe darstellt,
(iii) X einen gesättigten ringbildenden Teil, der aus (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁴)ₙ oder (CR¹⁰R¹¹)ₘ-S-(CR¹³R¹⁴)ₙ besteht,
X substituiert sein kann mit der Formel: 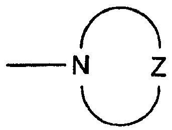 oder der Formel: 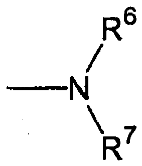
(iv) Z einen gesättigten ringbildenden Teil darstellt, der aus (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁴)ₙ oder (CR¹⁰R¹¹)ₘ-S-(CR¹³R¹⁴)ₙ besteht,
(v) R⁴ bis R⁷ jeweils Wasserstoff, eine C₁₋₃₀ aliphatische Kohlenwasserstoffgruppe, eine C₃₋₃₀ alicyclische Kohlenwasserstoffgruppe, eine C₅₋₃₀ aromatische Kohlenwasserstoffgruppe oder eine heterocyclische Gruppe, die 3 bis 30 Ringatome enthält, darstellen und gleich oder voneinander verschieden sind,
(vi) R⁰ und R⁸ bis R¹⁴ jeweils Wasserstoff, eine C₁₋₃₀ aliphatische Kohlenwasserstoffgruppe, eine C₃₋₃₀ alicyclische Kohlenwasserstoffgruppe oder eine C₅₋₃₀ aromatische Kohlenwasserstoffgruppe darstellen und gleich oder voneinander verschieden sind und
(vii) I eine ganze Zahl von 3 bis 10 darstellt und (viii) m und n jeweils eine ganze Zahl von 1 bis 9 darstellen, und
(b) Silica.

2. Kautschukzusammensetzung nach Anspruch 1, wobei zumindest ein Ende des Polymers mit einem Modifizierungsmittel modifiziert ist, das eine funktionelle Gruppe aufweist, die zumindest ein Atom, das aus der Gruppe bestehend aus Stickstoff, Sauerstoff und Silicium ausgewählt ist, enthält.

3. Kautschukzusammensetzung nach Anspruch 1, wobei die Menge der stickstoffhaltigen Verbindung in dem Polymer 0,05 bis 30 Gewichts-% beträgt.

4. Kautschukzusammensetzung nach Anspruch 1, wobei das Polymer ein gewichtsgemitteltes Molekulargewicht (Mw) von 1,0 x 10⁵ bis 2,0 x 10⁶ aufweist.

5. Kautschukzusamensetzung nach Anspruch 1, die 5 bis 150 Gewichtsteile Ruß und/oder Silica auf 100 Gewichtsteile der Kautschukkomponente, die das Polymer enthält, umfasst.

6. Reifen, der unter Verwendung der Kautschukzusammensetzung nach Anspruch 1 hergestellt ist.

## Revendications

1. Composition de caoutchouc comprenant
(a) un constituant de caoutchouc qui contient un polymère dans une quantité de 5 à 90 % en masse pour 100 % en masse du constituant de caoutchouc, dans lequel le polymère peut être obtenu par copolymérisation
d'un composé de diène conjugué et/ou d'un composé vinylique aromatique avec
un composé contenant de l'azote représenté par la formule : 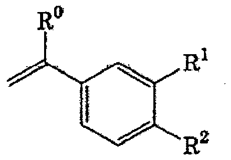 dans laquelle (i) R¹ et R² sont chacun l'hydrogène, la formule : 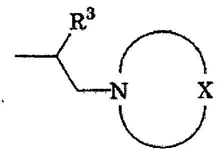 ou la formule : 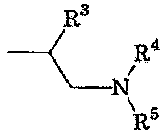 à condition qu'au moins un de R¹ et R² ne soit pas l'hydrogène,
(ii) R³ représente l'hydrogène ou un groupe hydrocarboné en C₁₋₄,
(iii) X représente une partie formant un cycle saturé constituée de (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁴)ₙ, ou (CR¹⁰R¹¹)ₘ-S-(CR¹³R¹⁴)ₙ,
X peut être substitué avec la formule : 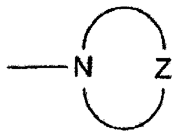 ou la formule : 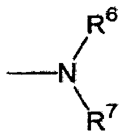
(iv) Z représente une partie formant un cycle saturé constituée de (CR⁸R⁹)ₗ, (CR¹⁰R¹¹)ₘ-NR¹²-(CR¹³R¹⁴)ₙ, (CR¹⁰R¹¹)ₘ-O-(CR¹³R¹⁴)ₙ, ou (CR¹⁰R¹¹)ₘ-S-(CR¹³R¹⁴)ₙ,
(v) R⁴ à R⁷ représentent chacun l'hydrogène, un groupe hydrocarboné aliphatique en C₁₋₃₀, un groupe hydrocarboné alicyclique en C₃₋₃₀, un groupe hydrocarboné aromatique en C₅₋₃₀, ou un groupe hétérocyclique contenant de 3 à 30 atomes annulaires, et sont identiques ou différents l'un de l'autre,
(vi) R⁰, et R⁸ à R¹⁴ représentent chacun l'hydrogène, un groupe hydrocarboné aliphatique en C₁₋₃₀, un groupe hydrocarboné alicyclique en C₃₋₃₀, ou un groupe hydrocarboné aromatique en C₅₋₃₀, et sont identiques ou différents l'un de l'autre, et
(vii) I représente un nombre entier de 3 à 10, et (viii) m et n représentent chacun un nombre entier de 1 à 9, et
(b) de la silice.

2. Composition de caoutchouc selon la revendication 1, dans laquelle au moins une terminaison du polymère est modifiée avec un agent de modification présentant un groupe fonctionnel qui contient au moins un atome choisi dans le groupe constitué de l'azote, de l'oxygène et du silicium.

3. Composition de caoutchouc selon la revendication 1, dans laquelle la quantité du composé contenant de l'azote dans le polymère est de 0,05 à 30 % en masse.

4. Composition de caoutchouc selon la revendication 1, dans laquelle le polymère présente une masse moléculaire moyenne en masse (Mw) de 1,0 x 10⁵ à 2,0 x 10⁶.

5. Composition de caoutchouc selon la revendication 1, comprenant de 5 à 150 parties en masse de noir de carbone et/ou de silice pour 100 parties en masse du constituant de caoutchouc contenant le polymère.

6. Pneu produit en utilisant la composition de caoutchouc selon la revendication 1.
